(19) Europäisches Patentamt
European Patent Office
Office européen des brevets

(11) **EP 4 745 911 A1**

(12) **EUROPEAN PATENT APPLICATION**

(43) Date of publication:
20.05.2026 Bulletin 2026/21

(21) Application number: 25216034.6

(22) Date of filing: **14.11.2025**

(51) International Patent Classification (IPC):
**G06V 10/764** (2022.01)    **B60W 30/18** (2012.01)
**B60W 40/06** (2012.01)    **B60W 50/14** (2020.01)
**G06V 20/56** (2022.01)    **G06V 20/58** (2022.01)
**G08G 1/01** (2006.01)    **G08G 1/04** (2006.01)
**G08G 1/095** (2006.01)    **G06V 20/54** (2022.01)

(52) Cooperative Patent Classification (CPC):
**G06V 20/56; B60W 30/18154; B60W 40/06;
B60W 50/14; G06V 10/764; G06V 20/54;
G06V 20/584; G06V 20/588; G08G 1/0116;
G08G 1/0141; G08G 1/04; G08G 1/095;**
G06V 10/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.11.2024 GB 202416914**

(71) Applicant: **Xan Labs International Ltd
Godalming
Surrey GU7 1LQ (GB)**

(72) Inventors:
• **JACKSON, Alexander John Brian
Surrey, GU7 1LQ (GB)**
• **JACKSON, Brian
Surrey, GU7 1LQ (GB)**
• **JACKSON, Luke William Brian
Surrey, GU7 1LQ (GB)**

(74) Representative: **Beck Greener LLP
Fulwood House
12 Fulwood Place
London WC1V 6HR (GB)**

(54) **METHODS, SOFTWARE AND SYSTEM FOR DETECTING VISIBILITY OR SURFACE CONDITIONS AT A LOCATION IN A ROAD NETWORK**

(57) A method and system of detecting visibility and/or surface conditions at a location in a road network. The method comprises capturing with a camera (30) at least one image (60) of a junction located in a road network where a traffic light is located. The image is communicated to software running on a computer system. The image is input to an AI component of the software trained to output a classification of the image relating to the visibility or surface condition. The visibility or surface condition is detected based on the classification.

FIG. 1

## Description

The present invention relates to methods, software and system for detecting visibility or surface conditions at a location in a road network.

## BACKGROUND

There are many scenarios where it is useful to detect various prevailing weather conditions or other phenomenon and their effects for road users, e.g. visibility and road surface conditions. To this end, various types of dedicated sensors are known, e.g. in weather stations, which operate on various principles. These can include visibility sensors, such as : 1) Forward scatter sensors where the emitter emits an infrared light beam at an offset angle from the receiver and the amount of light scattered by particles in the air and received by the receiver indicates visibility range, e.g. often found in airports or along roads to measure horizontal visibility; 2) Transmissometer sensors include an emitter and receiver, where the direct light transmissivity is measured indicating visibility range; 3) LIDAR i.e. a light detection and ranging sensor used for long range visibility sensing. Other weather stations may include a component that detects the presence of hydrometeors and determines their type (rain, snow, drizzle, etc.) and intensity.

There have been attempts to use cameras to estimate visibility based on captured images, e.g. to avoid the expense of providing and installing dedicated sensor systems or where such systems are impractical. https://www.semanticscholar.org/paper/Exploration-of-fog-detection-and-visibility-from-Wauben-Roth/ 994a18292119d40da4f30bd6f0d69b87cdce9c23

This paper explores various techniques for automatic fog detection using camera images. One method uses a set of landmarks at known distances. This relies on calibration based on images taken on clear days and known distances to the landmarks. The edges of the landmark object are detected using computer vision techniques. An object is considered visible if a sufficient number of edges are contained in the relevant area of the image.

Other methods do not require specific targets to be identified, but rely on statistical tests. For example, the mean number of edges detected in the image, or the contrast between chosen objects and the sky.

Such techniques suffer the problem of inhomogeneous visibility conditions to which the measurement is sensitive. These techniques are also only applicable during daylight.

Other approaches attempt to train neural networks to classify fog based on camera images, such as https://www.semanticscholar.org/paper/DEEP-NEURAL-NETWORK-APPROACH-FOR-AUTOMATIC-FOG-Pagani-Noteboom/ b3dd378b3fa140a519d67a5887a63cdcf26b80e0

Other methods involve a camera or other sensors mounted to a vehicle for detecting visibility or road conditions, e.g. based on the visibility of road markings or taillights of other vehicles. For instance, US2014029790A1 relates to a method for detecting fog at night wherein a vehicle mounted camera detects streetlights or its own headlights. The method combines the techniques of 1) detecting the light sources in the image and detecting a "halo" around the light source and 2) analysing the backscattering of light emitted by light sources.

EP2195688A2 detects weather conditions via a camera mounted on a car. Bright pixels (illuminated by overhead lights or vehicles ahead) are detected and used to decide whether caused by reflections due to rain, or snow.

Other systems are described in US11521127B, US2004/0204812A1, US2018005084A1, US2021372919A1, US2002040962A, US2007031006A1, WO2009/027089A2, US 6831261, JPH11278182A, KR102471542B1.

One particular scenario where it is beneficial to detect visibility or surface conditions is in the operation of autonomous vehicles. Autonomous vehicles can be used to aid in the transport of passengers or cargo from one location to another. Such vehicles may operate in a fully autonomous mode or a partially autonomous mode where a person may provide some driving input. In order to operate in an autonomous mode, a determination may be made that driving conditions are suitable to safely permit this. Weather affecting visibility, e.g. fog, rain, etc, or weather affecting road conditions including whether the roadway is dry, wet, icy, etc. may impact safe autonomous operation of the vehicle. In such scenarios, the vehicle may prompt the driver to resume manual control and/or warn the driver and/or prompt or automatically take appropriate action in response to the hazard such as reducing speed, altering settings of the vehicle, such as wipers or lights, take or recommend a different route to avoid a location where hazard has been identified, or any other suitable measures.

## SUMMARY OF INVENTION

According to a first aspect of the present invention, there is provided a method of detecting visibility and/or surface conditions at a location in a road network, the method comprising:

capturing with a camera at least one image of a junction located in a road network where a traffic light is located;

communicating the image to software running on a computer system;

inputting the image to an AI component of the software trained to output a classification of the image relating to the visibility or surface condition; and

detecting the visibility or surface condition based on the classification.

Using traffic lights present unique opportunities and advantages in detecting weather conditions due to a number of factors. Firstly, they are already prevalent across most road networks and can be used with no additional infrastructure. They are substantively always in operation, i.e. 24 hours a day operation, and so give an always available source of information. This obviates the need for the camera to have a light source. They also include the availability of different, closely defined wavelengths of light and/or sequences of light. For instance, a typical traffic light in the UK will have 3 lights following a sequence of Red, Red and Amber, Green, Amber phases. This may help give more information to the detection process and help distinguish between weather conditions, as discussed below. The traffic lights specifications are typically highly standardised throughout a jurisdiction, being physically spaced apart at known intervals, having standardised heights above the ground, and having well defined, constant intensities, sizes and frequencies. All these factors may help distinguish between weather conditions compared to other light sources and in particular single, homogenous light sources such as street lights which are in any case turned off during the day. Other standardised sequences, shapes and colours may be available, according to the junction type and jurisdiction and type of traffic signal.

In an embodiment, the visibility conditions include one or more of fog, mist, rain, snow, and sleet, smoke, sandstorm, dust, and road conditions include one or more of water, ice, black ice, sand and dust on the road surface. In principle, any phenomenon affecting visibility or the road surface conditions can be detected by this method. Often this will be a weather condition, e.g. rain causing a wet road and/or standing water, or mist reducing visibility, but other conditions, such as a burst water main flooding the road or nearby fire causing smoke to drift over the road may also be detected.

In an embodiment, the method comprising determining an automatic action or warning relating to the operation of an autonomous vehicle in response a positive detection of the visibility or surface condition; and controlling operation of the automatic vehicle in autonomous mode in accordance with the determined action or causing a warning to be displayed to a driver of the autonomous vehicle. In an embodiment, controlling operation of the vehicle includes at least one of alteration of a current driving action, modification of a planned route or trajectory, or activation or reconfiguring of an on-board system.

In an embodiment, the method comprising displaying a warning message in response to a positive detection of the visibility or surface conditions at a roadside display. The warning may be displayed to road users, e.g. drivers, or otherwise to people concerned with local conditions. In an embodiment, the visible or surface condition is communicated to another computer system for further process. For instance, information may be fed to a weather service or smart city controller for taking further action based on the information. In embodiments, the visibility and/or surface condition may be used by the system to determine a prevailing weather condition.

In an embodiment, the method comprising iteratively training the AI on a training data set comprising classified input images, wherein the input images are captured by cameras and classified according to data received from a local weather station and/or human operator.

In an embodiment, the method comprising with the software issuing control signals to the camera causing the camera to pan, tilt or zoom to focus on the traffic light and/or an area of interest of the road surface before capturing the image. Thus, existing traffic cameras may be repurposed or "borrowed" to perform the method of this embodiment by temporarily redeploying the camera from a first task, e.g. monitoring traffic at a junction, to capturing suitable images of the traffic light for use with the method.

In an embodiment, the software issues the control signal periodically and/or in response to a signal received from a weather service or weather station indicating or predicting adverse weather conditions in the area of the camera. Thus, the camera may be temporarily diverted from its first task periodically, e.g. once every hour or other predetermined time period the camera will be moved to capture appropriate images, or the camera may be controlled to capture images for use in determining visibility or road surface conditions in response to a weather alert, e.g. rain or fog being expected in the area, to get a more accurate, localised detection of the weather conditions.

In an embodiment, the traffic light is on 24/7 and/or comprises plural lights of respective different colours.

In an embodiment, traffic lights have plural phases in which different sets of the plural lights are illuminated, wherein plural images captured by the camera or a video clip is communicated to the software such that images capturing each of the plural phases are used by the AI to classify the weather.

In an embodiment, the method comprising communicating weather information from a weather prediction service or weather station to the software as further input to the AI in classifying the image according to weather-related conditions.

In an embodiment, the method comprising with the software cropping the images to focus on the traffic lights or areas of the road surface which reflect light from the traffic lights before inputting them to the AI.

In an embodiment, the area of road surface has a pattern selectively deposited thereon.

In an embodiment, the AI is iteratively trained on a training data set comprising classified input images, wherein the input images are captured by cameras and classified according to data received from a local weather station and/or human operator labelling.

In an embodiment, classifications of the AI are checked against observed weather conditions to provide feedback and further improve the accuracy of the AI model.

In an embodiment, the camera comprises or is associated with a light source. Thus, the camera may have its own light source, such as in the visible or infrared frequency range, to additionally or alternatively illuminate the scene. Thus, the effects of two light sources, i.e. the traffic signal and the camera light source, may give additional information in determining visibility or road conditions.

According to a second aspect of the present invention, there is provided a method of training AI to determine visibility or surface conditions at a location in a road network, the method comprising:

receiving a training data set comprising plural records, each record including at least one image of a junction located in a road network where a traffic light is located and an output vector of prevailing visibility or surface conditions at the junction;

training an AI model on the training data set to produce an output indicative of a classification of the image according to visibility or surface conditions, wherein training includes successively feeding the input vectors into the model to classify the images, and feeding back the error between the classification and output vector to adjust the model parameters.

According to a third aspect of the present invention, there is provided software comprising computer program instructions for causing a computer system to carry out the method described above.

According to a fourth aspect of the present invention there is provide a system for detecting visibility or surface conditions at a location in a road network, the system comprising:

at least one traffic light located at a junction in a road network;

a camera (30) arranged to capture at least one image (60) of the junction where the traffic light is located; and

a computer system in communication with the camera and arranged to execute software, wherein the software is arranged to receive images captured by the camera,

the software comprising an AI model trained to output a classification of the image relating to the visibility or surface condition, and

the software is arranged to detect the visibility or surface condition based on the classification.

In an embodiment, the system is arranged to carry out the method of any preceding claim.

According to a fifth aspect of the present invention, there is provided a method of detecting visibility and/or surface conditions at a location in a road network, the method comprising:

capturing with a camera (30) at least one image (60) at a junction or location in a road network where a light is located or where the camera comprises a light to illuminate the surroundings;

communicating the image to software running on a computer system;

inputting the image to an AI component of the software trained to output a classification of the image relating to the visibility or surface condition; and

detecting the visibility or surface condition based on the classification.

Thus, this aspect may work with other light sources, such as street lights, etc or the camera having its own light to illuminate the scene. In other words, in some aspects it is not necessary to capture images of traffic lights comprising plural lights.

The road or visibility condition may include weather conditions or weather related conditions due to airborne water vapour or precipitation and/or road surface conditions due to standing water, ice, and other weather related deposits on the surface of the road etc, or other phenomenon that can affect visibility or road conditions, such as nearby fires generating smoke or ash on the road, or dush or other particular matter deposited on the road.

It will be appreciated that any features expressed herein as being provided "in one example" or "in an embodiment" or as being "preferable" may be provided in combination with any one or more other such features together with any one or more of the aspects of the present invention.

## BRIEF DESCRIPTION OF DRAWINGS

Embodiments of the present invention will now be described by way of example with reference to the accompanying drawings, in which:

Figure 1 shows an example of an embodiment a system for classifying weather based visibility and/or road surface conditions;

Figure 2 shows an example of an image captured by a roadside camera;

Figure 3a shows another example of an image captured by a roadside camera, with Figure 3b showing reflection of light from traffic signals to the camera from an area of road and Figure 3c showing the angles of reflection and refraction where the incident light strikes the road surface;

Figure 4 shows an embodiment of a software system for classifying weather based visibility and/or road surface conditions;

Figure 5 shows an example of a computer system for implementing the software;

Figure 6 shows an embodiment of a training methodology for training an AI model; and

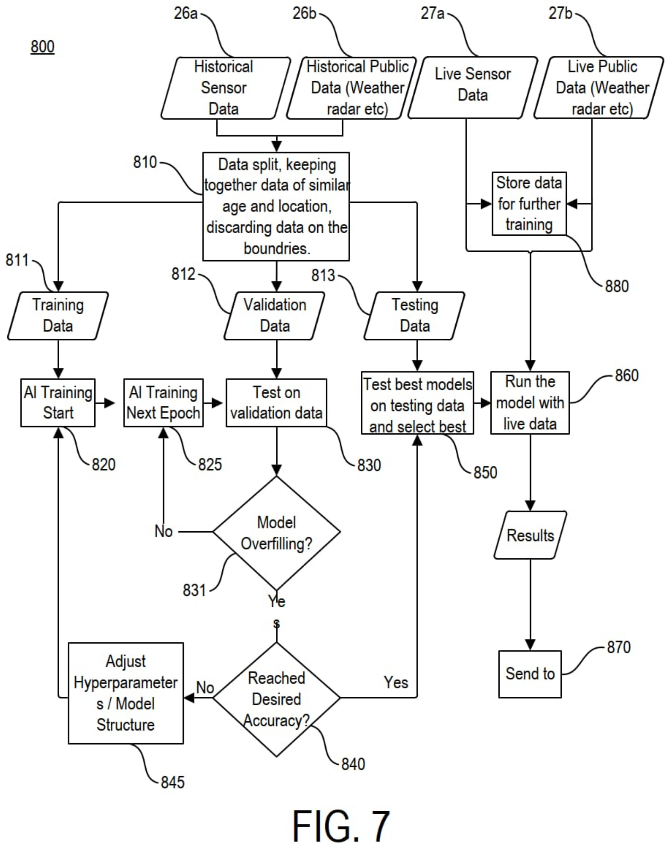

Figure 7 shows a flow diagram of the AI model being developed and deployed.

## DETAILED DESCRIPTION

### System

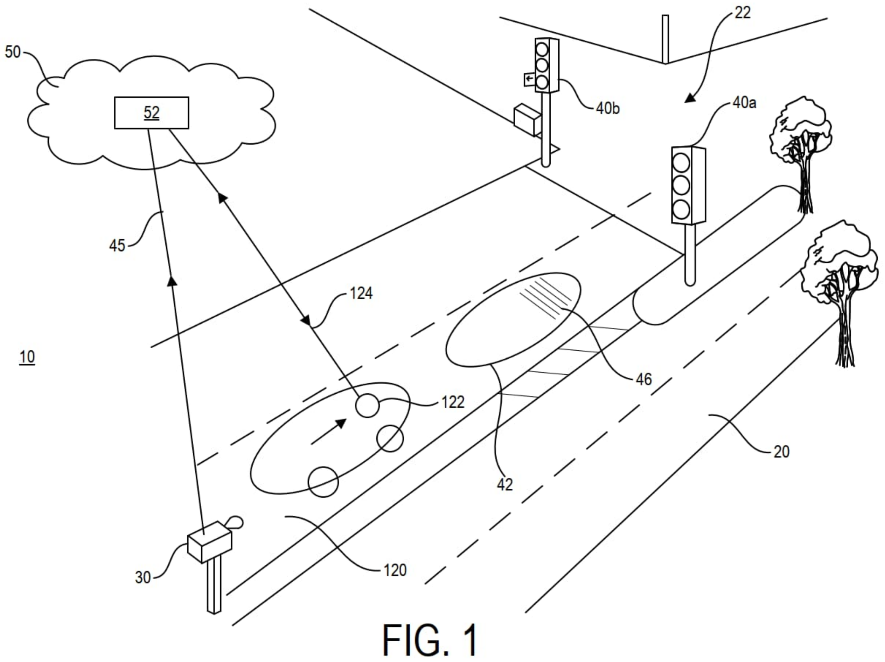

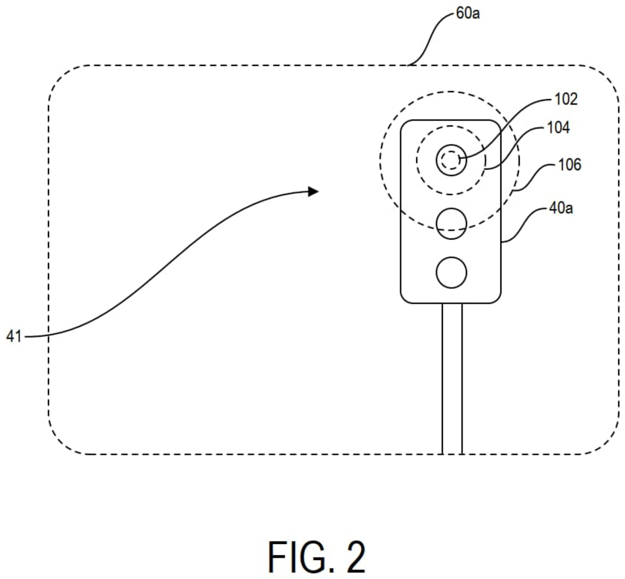

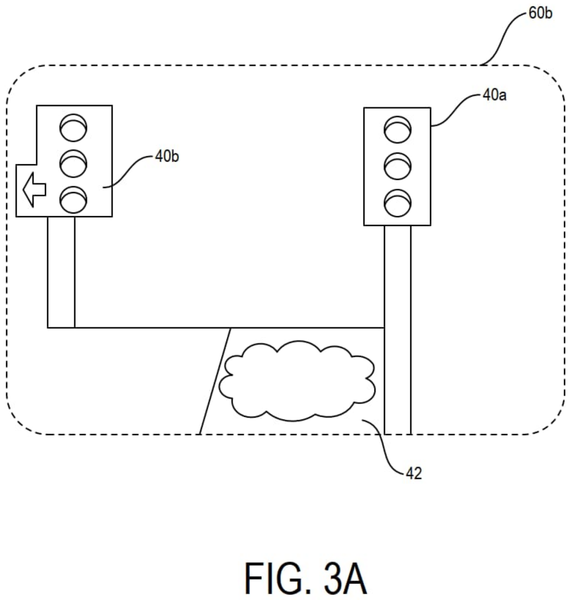

Figure 1 shows a system 10 for detecting weather based visibility and/or road surface conditions at a particular location in a road network 20. A camera 30 is mounted roadside in a stationary position such that a junction 25 is in its field of view or can be made to be in view by controlling the camera. One or more traffic lights 40 are situated at the junction 22 to control traffic. At least one traffic light 40a,40b is in the field of view of the camera 30 such that the lights are visible in the images captured by the camera. The camera might typically be between 20m and 30m or more away from the junction with a 180 degree field of vision. Where the camera has tilt, pan and/or zoom capabilities, the camera may be positioned further away from the junction and controlled to focus on the junction. In some examples, such as shown by Figure 2, the camera 30 can focus on a single traffic light 40a. In other examples, as shown by Figure 3a, the camara 30 can be configured to capture a wider field of view including multiple traffic lights 40a,40b and/or areas of interest of the road surface 42. In still other examples, such as where the camera has a 180 degree field of vision, the camera can capture not only the traffic light and reflections from the road, but also background, i.e. the surrounding urban or country locale, which provides context for interpreting the images.

The camera may capture visible light or infra-red light or a combination, e.g. a multispectral camera.

Generally the cameras for all junctions have similar distances and angles to help the AI learn.

The camera images 60 may be transmitted 45 to software 52 running in a cloud server 50 or local server for processing and detecting weather conditions. The software may comprise a trained deep learning neural network as described further below. The weather conditions may include one or any combination of visibility conditions, including any of fog, mist, rain, sleet, snow, hail, and road conditions, including any of standing water, ice and black ice on the road surface.

The inventors have realised that traffic lights present unique opportunities and advantages in detecting weather conditions due to a number of factors. Firstly, they are already prevalent across most road networks and can be used with no additional infrastructure. They are also typically never turned off, i.e. they are operational continuously (except occasionally for maintenance), i.e. day and night 24 hours a day 7 days a week and so give an always available source of information. They also include the availability of different, closely defined wavelengths of light from the typical red, amber, green signals. For instance, in the UK the typical sequence is:

Red - Stop, do not proceed

Red and Amber - Get ready to proceed, but do not proceed yet

Green - Proceed if the intersection or crossing is clear

Amber - Stop, unless it is unsafe to do so

In this sequence, there are three different colours/wavelengths of light, including one that comprises two wavelengths, which may help give more information to the detection process and help distinguish between weather conditions, as discussed below. The traffic lights specifications are typically highly standardised throughout a jurisdiction, being physically spaced apart at known intervals, having standardised heights above the ground, and having well defined, constant intensities, sizes and frequencies. All these factors may help distinguish between weather conditions compared to other light sources and in particular single, homogenous light sources such as street lights which are in any case turned off during the day.

Other standardised sequences, shapes and colours may be available, according to the junction type and jurisdiction.

Furthermore a junction may have more than one set of lights that can be captured by a camera adding more information to aid the accuracy of the prediction. Furthermore, the cameras can capture background information about the environment, e.g. urban or rural, etc, which can provide more context for the AI interpreting the images.

### Visibility

As shown by Figure 2, the software may look at the visibility or intensity of the light in the region of the light 102, or the intensity of "halos" 104,106 formed by scattering around the light due to fog 41 or other weather patterns affecting line of sight visibility.

The propagation of light through a mist, fog, rain, hail, sleet, snow, dust, smoke, or any other medium comprising small particles, depends on several factors, including the wavelength of the light and the size and composition of the particles. There follows an overview of how different colors of light propagate through mist. NB. Unless the context requires otherwise, "mist" or "fog" as used herein refers to any airborne water vapour affecting visibility.

Scattering and Absorption

  1. Rayleigh Scattering:

    ◦ Description: Rayleigh scattering occurs when the particles in the mist are much smaller than the wavelength of light. It is more effective at shorter wavelengths.

    ◦ Impact on Colors: This scattering causes shorter wavelengths (blue and violet light) to scatter more than longer wavelengths (red and yellow light). This is why the sky appears blue and sunsets appear red.

  2. Mie Scattering:

    ◦ Description: Mie scattering occurs when the particles in the mist are about the same size as the wavelength of light. It affects all wavelengths more equally.

    ◦ Impact on Colors: This type of scattering does not strongly favor shorter wavelengths over longer wavelengths. As a result, the mist may appear white or gray because it scatters all colors of light.

  3. Absorption:

    ◦ Description: Absorption occurs when particles in the mist absorb certain wavelengths of light more than others.

    ◦ Impact on Colors: If the particles have specific absorption characteristics, certain colors of light will be absorbed more than others, which can change the color of the transmitted and scattered light. For instance, if the mist contains water droplets, water absorbs more infrared and ultraviolet light, affecting the visibility and color of the light passing through.

Colour Propagation in Mist

1. Blue Light:

◦ Scattering: Blue light is scattered more effectively than red light due to Rayleigh scattering.

◦ Visibility: In mist, blue light will be scattered in many directions, reducing its visibility over longer distances and making the mist appear bluish when viewed against a dark background.

2. Red Light:

◦ Scattering: Red light is scattered less than blue light, allowing it to propagate further through the mist.

◦ Visibility: Red light will be more visible over longer distances in mist compared to blue light. This is why red lights (like taillights and brake lights) are often used in foggy conditions.

3. Green Light:

◦ Scattering: Green light is scattered more than red light but less than blue light.

◦ Visibility: Green light will have intermediate visibility in mist, better than blue but not as good as red.

4. White Light:

◦ Scattering: White light, which contains all colors, will experience both Rayleigh and Mie scattering.

◦ Visibility: White light will be scattered in all directions, reducing visibility in the mist. It can make the mist appear white or gray due to the combination of all scattered wavelengths.

Practical Implications

• Lighting in Foggy Conditions:

◦ Red or Amber Lights: These are preferred for fog lights and taillights because they scatter less and remain more visible over longer distances in misty or foggy conditions.

◦ Blue and White Lights: These scatter more and are less effective in maintaining visibility in mist.

• Visual Perception:

◦ Bluish Haze: In thin mist or light fog, the sky can appear bluish due to Rayleigh scattering.

◦ White or Gray Mist: In thicker mist or fog, the light scattering from all directions (Mie scattering) can make the mist appear white or gray.

Summary

The propagation of different colors of light through mist or fog is heavily influenced by the scattering effects of the particles in the mist. Blue light scatters more due to Rayleigh scattering, making it less visible over long distances, while red light scatters less and remains more visible. Mie scattering can cause the mist to appear white or gray, affecting all colors more equally. These principles are crucial for understanding visibility in foggy or misty conditions and for designing effective lighting solutions. It can be seen that these principle extend to the colour typically found in traffic signals, e.g. red, green and amber as found in most traffic light systems.

Fog v Mist

It is also expected that the system will be able to discriminate between different types of airborne factors affecting visibility, e.g. fog and mist, which are typically defined as follows. Mist consists of microscopic water droplets suspended in the air, reducing visibility to between 1 kilometer (0.6 miles) and 2 kilometers (1.2 miles). Mist typically forms when the relative humidity is around 70-90%. Fog is essentially a denser version of mist, with visibility reduced to less than 1 kilometer (0.6 miles) which forms when the relative humidity reaches 100%, leading to the saturation of air with water vapor.

**1. Density and Droplet Size:**

○ Mist: Contains fewer and smaller water droplets compared to fog. Droplets are typically between 10-20 micrometers in diameter.

○ Fog: Contains more and larger water droplets than mist. Droplets are typically between 10-50 micrometers in diameter.

**2. Scattering of Light:**

○ Rayleigh Scattering: Relevant for particles much smaller than the wavelength of light. This effect is more pronounced in mist, where smaller droplets scatter shorter wavelengths (blue light) more effectively.

○ Mie Scattering: Dominant when the particles are comparable in size to the wavelength of light. This is the primary scattering mechanism in fog. Mie scattering affects all wavelengths more equally, leading to less color-dependent scattering and more uniform light diffusion.

**3. Visibility and Appearance:**

○ Mist: Due to smaller droplet sizes, mist causes more Rayleigh scattering, which can make it appear bluish when illuminated by sunlight or other white light sources. Visibility is higher in mist than in fog.

○ Fog: Causes significant Mie scattering, which scatters all wavelengths of light more uniformly, leading to a white or gray appearance. Fog significantly reduces visibility more than mist.

**4. Light Attenuation:**

○ Mist: Attenuates light less than fog because of lower droplet density and smaller droplet size. Therefore, light can penetrate mist more effectively, making it easier to see through.

○ Fog: Attenuates light more due to higher droplet density and larger droplet size. Light is scattered and absorbed more, leading to greater reduction in visibility.

**5. Color of Light:**

○ Mist: Shorter wavelengths (blue light) scatter more due to Rayleigh scattering, which might make mist appear slightly bluish.

○ Fog: All wavelengths scatter more evenly due to Mie scattering, making fog appear uniformly gray or white.

Summary:

• Mist:

○ Lower density of water droplets.
○ Smaller droplet size (10-20 micrometers).
○ More Rayleigh scattering, causing shorter wavelengths to scatter more.

∘ Appears bluish and allows better visibility.

∘ Less light attenuation.

- Fog:

∘ Higher density of water droplets.

∘ Larger droplet size (10-50 micrometers).

∘ Dominant Mie scattering, affecting all wavelengths more equally.

∘ Appears white or gray and significantly reduces visibility.

∘ More light attenuation.

Rain, sleet, hail and snow may also be distinguished according to their different signatures. Thus, the model can be trained to distinguish atmospheric weather conditions by looking at variations in the above values, e.g. the brightness of the light and the diffraction of the different colours in the traffic signals. The model may also learn to distinguish other airborne particulars such as smoke, e.g. from a fire, or dust or sand, which can have different effects on the propagation of light from the lights to the camera.

The model may also take into account reflections of the lights from the road surface or other surface where the field of view of the camera is large enough to detect these reflections. This can give further information which the model can use to learn to distinguish the various air conditions. For instance, higher reflection due to rain beginning to collect on the road surface may give further information that can be used to determine that it is raining.

### Road Conditions

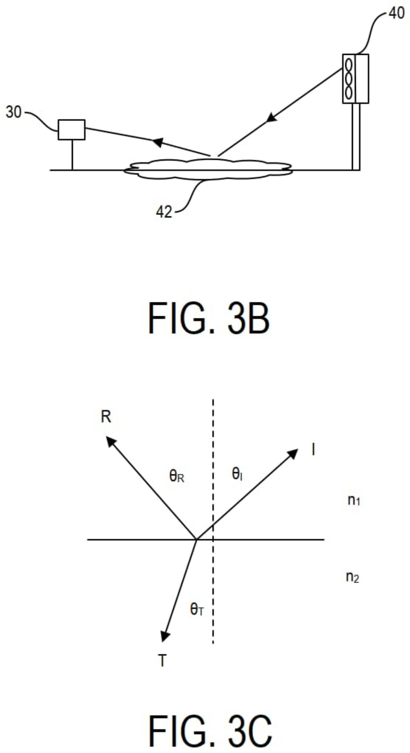

The software may alternatively or additionally determine weather related road conditions, e.g. incidence of standing water, ice, black ice, frost, etc. As shown in Figure 3A and 3B, the camera 30 captures light reflecting from the road surface 42. When light strikes the surface, the light is reflected and refracted at different angles according to the applicable refractive indices and Fresnel equations, e.g. as shown in Figure 3c and described below. Different properties can be expected to be captured by the camera images 60b of different road surface conditions according to the captured properties of the reflected light.

The reflection of light off standing water can vary significantly between different wavelengths of light, such as green and red. In detail:

### Reflection of Green and Red Light off Standing Water

### 1. Wavelength and Color:

∘ **Green Light:** Typically around 500-570 nm.

∘ **Red Light:** Typically around 620-750 nm.

### 2. Reflection Mechanism:

o When light strikes the surface of standing water, some of it is reflected while the rest is refracted into the water. The degree of reflection depends on the angle of incidence and the wavelength of the light.

### 3. Angle of Incidence:

∘ At normal incidence (light hitting the surface perpendicularly), the reflectance is relatively low for both green and red light.

∘ As the angle of incidence increases, the reflectance increases due to the Fresnel equations, which describe how light is partially reflected and refracted at an interface between two different media.

### 4. Fresnel Reflection:

o Fresnel's equations indicate that reflection depends on the refractive indices of air and water, and the polarization of light. For non-polarized light, the reflection coefficient RR for normal incidence can be approximated (Schlick's model) as: $R = ((n1-n2)/(n1+n2))^2$ where n1 is the refractive index of air (approximately 1) and n2 is the refractive index of water (approximately 1.33) (See figure 3c).

### 5. Wavelength Dependence:

◦ The refractive index of water slightly varies with wavelength, but this variation is small. Therefore, the difference in reflectance for green and red light due to wavelength is minimal.
◦ However, the reflection can still differ slightly because the refractive index of water is marginally higher for shorter wavelengths (green light) compared to longer wavelengths (red light). This means green light is slightly more reflected than red light.

### 6. Surface Conditions:

◦ For smooth water surfaces, the reflection is specular (mirror-like), meaning it strongly depends on the angle of incidence.
◦ For wavy or disturbed water surfaces, reflection becomes more diffuse, scattering light in various directions, potentially reducing the difference in reflection between green and red light.

### Summary

- **Angle of Incidence:** Reflection increases with angle but affects both colors similarly.
- **Wavelength:** Green light is slightly more reflected than red light due to its shorter wavelength and slightly higher refractive index of water for green light.
- **Surface Condition:** A smooth surface leads to specular reflection, maintaining the slight difference. A rough surface causes diffuse reflection, minimizing the difference.

In practical terms, the difference in reflection between green and red light off standing water is minor and mainly noticeable under controlled conditions with specific angles of incidence and smooth water surfaces.

The reflective characteristics of light when it interacts with ice versus water can be quite different due to their distinct physical properties. Here is a detailed comparison:

### Reflective Characteristics of Ice vs. Water

### 1. Refractive Index:

◦ **Water:** The refractive index of liquid water is approximately 1.33.
◦ **Ice:** The refractive index of ice is slightly lower, around 1.31.

### 2. Surface Texture:

◦ **Water:** Typically has a smooth surface when undisturbed, leading to specular reflection.
◦ **Ice:** Can have a smooth surface when newly formed or can be rough and irregular, leading to more diffuse reflection.

### 3. Reflection Coefficient:

◦ The reflection coefficient (reflectance) can be calculated using Fresnel's equations. For normal incidence (light hitting the surface perpendicularly), the reflectance R can be approximated (Schlick 's model) as:

$$R=((n1-n2)/(n1+n2))^2$$

where n1 is the refractive index of air (approximately 1) and n2 is the refractive index of water or ice.
◦ For water:

$$R\_water = ((1 - 1.33)(1 + 1.33))^2 = approx\ 0.02\ \ (or\ 2\%)$$

○ For ice:

$$R\_ice = ((1 - 1.31)(1 + 1.31))^2\ approx\ 0.018\ (or\ 1.8\%)$$

4. Thus, at normal incidence, both ice and water reflect a small portion of the light, with ice reflecting slightly less.
5. **Angle of Incidence:**

o As the angle of incidence increases (light hitting the surface at a steeper angle), the reflectance increases for both ice and water. This is due to the Fresnel equations which describe how the reflectance depends on the angle and polarization of the light.

6. **Polarization:**

○ The reflectance can vary depending on the polarization of the incident light (s-polarized or p-polarized). For both ice and water, s-polarized light (perpendicular to the plane of incidence) has higher reflectance than p-polarized light (parallel to the plane of incidence).

7. **Temperature and Impurities:**

○ **Water:** Pure water reflects light predictably, but impurities (like salt or organic matter) can alter its reflective properties.
○ **Ice:** The reflective characteristics of ice can vary significantly with the presence of air bubbles, cracks, or impurities. Clear ice with fewer impurities has lower reflectance compared to ice with many air bubbles or inclusions.
○

**Comparison Summary**

- **Refractive Index:** Ice (1.31) has a slightly lower refractive index than water (1.33), leading to marginally lower reflectance at normal incidence.
- **Surface Texture:** Smooth water reflects light specularly; ice can reflect light either specularly or diffusely depending on its texture, e.g. whether white ice or black ice.
- **Reflectance at Normal Incidence:** Water reflects about 2% of light, while ice reflects about 1.8%.
- **Angle of Incidence:** Reflectance increases with the angle for both materials, following Fresnel's equations.
- **Polarization:** Both materials show higher reflectance for s-polarized light compared to p-polarized light.
- **Temperature and Impurities:** Both water and ice can have altered reflective properties due to impurities, with ice also being affected by air bubbles and structural irregularities.

In conclusion, while both ice and water have similar reflective properties, the key differences lie in their surface texture and how impurities or structural characteristics can affect the way they reflect light.
Ice formed on roads can come in several different types, each with distinct characteristics and formation conditions. Here are the main types of ice that may form on roads:

**Types of Ice on Roads**

1. **Black Ice:**

○ **Description:** A thin, transparent layer of ice that forms on the road surface, making it appear wet rather than icy. It is called "black ice" because it is hard to see against the dark asphalt.
○ **Formation:** Black ice forms when the air temperature is above freezing, but the road surface temperature is below freezing, causing moisture (from dew, fog, or light rain) to freeze upon contact with the road.

2. **Glaze Ice:**

  ◦ **Description:** A smooth, transparent layer of ice that forms when freezing rain or drizzle falls and freezes on contact with the cold road surface.
  ◦ **Formation:** Occurs during freezing rain events when liquid precipitation contacts surfaces that are at or below the freezing point, creating a clear, solid sheet of ice.

3. **Frost:**

  ◦ **Description:** A thin layer of ice crystals that form on the road surface.
  ◦ **Formation:** Frost forms when the air temperature is at or below the dew point and the road surface temperature is below freezing, causing water vapor to deposit directly as ice.

4. **Slush:**

  ◦ **Description:** A mix of water and partially melted snow or ice, which can refreeze into solid ice if temperatures drop again.
  ◦ **Formation:** Occurs when snow or ice partially melts due to slightly above-freezing temperatures or road treatments like salt and then refreezes as temperatures drop.

5. **Compacted Snow:**

  ◦ **Description:** Snow that has been compressed by traffic, creating a dense, hard layer that can eventually turn into ice.
  ◦ **Formation:** As vehicles drive over fallen snow, it becomes compacted and, over time and with further pressure, turns into a solid, icy layer.

6. **Hoar Frost:**

  ◦ **Description:** A type of frost that forms when water vapor in the air comes into contact with a surface that is below freezing, creating feathery or crystalline ice patterns.
  ◦ **Formation:** Often occurs on clear, cold nights when the road surface cools rapidly.

The reflective characteristics of black ice compared to water are influenced by their physical properties, including surface texture, transparency, and refractive index. There follows a detailed comparison:

**Reflective Characteristics of Black Ice vs. Water**

1. **Surface Texture:**

  o **Black Ice:** Black ice forms a very smooth, thin layer over the road surface. It is typically very slick and has a glass-like finish, which can make it highly reflective, especially under certain lighting conditions (e.g., headlights, streetlights).
  ◦ **Water:** Water on the road can also form a smooth surface when undisturbed, creating specular reflection. However, moving water or water with surface disturbances will scatter light, reducing its reflectivity.

2. **Transparency:**

  ◦ **Black Ice:** Black ice is nearly transparent, making it hard to see against the dark surface of the road. This transparency can cause it to reflect light in a way that makes the road look wet rather than icy.
  ◦ **Water:** Water is also transparent, but it typically looks darker and can exhibit varying degrees of reflectivity based on its depth and surface conditions.

3. **Refractive Index:**

  ◦ **Black Ice:** The refractive index of ice is around 1.31, which is slightly lower than water. This small difference affects how light is refracted and reflected at the interface.
  ◦ **Water:** The refractive index of liquid water is approximately 1.33.

4. **Reflectance at Normal Incidence:**

  o The reflectance RR at normal incidence for a smooth surface can be approximated using Fresnel's equations:

$$R=((n1-n2)/(n1+n2))^2$$

where n1 is the refractive index of air (approximately 1) and n2 is the refractive index of ice or water.
  ◦ For black ice:

$$R\_ice= ((1 - 1.31)/(\{1 + 1.31))^2 = approx\ 0.018\ (or\ 1.8\%)$$

  ◦ **For** water:

$$R\_water = ((1 - 1.33)(1 + 1.33))^2 = approx\ 0.02\ (or\ 2\%)\}$$

5. Both materials have low reflectance at normal incidence, with water reflecting slightly more light than black ice.
6. **Behavior Under Different Angles of Incidence:**

  ◦ **Black Ice:** As the angle of incidence increases (light hitting the surface at a steeper angle), the reflectance increases due to the Fresnel effect. This can make black ice more visible when viewed at shallow angles, as it may reflect more light from car headlights.
  ◦ **Water:** Similarly, water's reflectance increases with the angle of incidence. However, because water may have more surface ripples and imperfections, it might scatter light more than black ice.

7. **Practical Implications:**

  ◦ **Visibility:** Black ice is particularly hazardous because it is hard to detect visually. It often makes the road look slightly wet rather than icy, leading to unexpected slippery conditions. Its high reflectivity under certain angles can sometimes be a clue to its presence, as it might reflect headlights more sharply than wet asphalt.
  ◦ **Water:** Water on the road is generally more visible and recognizable, either through its reflective properties or through surface disturbance patterns. Drivers are usually more cautious when roads appear wet.

**Summary**

- **Surface Texture:** Both black ice and undisturbed water can create smooth, reflective surfaces. Black ice is generally more consistently smooth and slick.
- **Transparency:** Both are transparent, but black ice's transparency makes it blend in with the road, while water tends to appear darker.
- **Reflectance:** Water reflects slightly more light than black ice at normal incidence. Both reflectance values increase with the angle of incidence.
- **Visibility:** Black ice is harder to see and more dangerous because it often appears as a wet surface, whereas water is more readily identified by drivers.

The reflectivity of black ice, like any other material, can vary with the color (wavelength) of the light being reflected due to the material's optical properties. There follows a description of how different wavelengths (colors) of light might interact with black ice compared to water:

**Reflectivity and Wavelength Dependence**

**1. Refractive Index and Wavelength:**

○ Both ice and water have refractive indices that change slightly with wavelength. This change is known as dispersion.
○ Generally, shorter wavelengths (blue light) have a slightly higher refractive index compared to longer wavelengths (red light).

2. **Fresnel Equations and Wavelength:**

○ The Fresnel equations, which describe the reflection of light at an interface, indicate that reflectance depends on the refractive indices of the materials involved.
○ Since the refractive index of ice and water changes slightly with wavelength, the reflectance also varies slightly with the color of the light.

3. **Reflectivity of Black Ice with Different Colors of Light:**

○ **Blue Light:** Blue light (shorter wavelength) typically experiences a slightly higher refractive index in ice, leading to a marginally higher reflectance compared to red light.
○ **Red Light:** Red light (longer wavelength) experiences a slightly lower refractive index in ice, resulting in marginally lower reflectance compared to blue light.

4. **Practical Differences:**

○ The differences in reflectance due to wavelength are usually very small and may not be easily noticeable in practical situations.
○ However, under certain conditions, the subtle difference might affect how black ice appears under different lighting conditions. For example, under blue or white LED headlights, black ice might reflect light slightly differently than under traditional halogen headlights, which emit more yellowish light.

**Summary of Reflectivity Differences**

- **Refractive Index Variations:** Both ice and water have refractive indices that change slightly with wavelength, causing minor differences in reflectance for different colors of light.
- **Higher Reflectance for Blue Light:** Black ice will reflect blue light slightly more than red light due to the higher refractive index for shorter wavelengths.
- **Overall Impact:** The practical impact of these differences is minimal, but it might influence the visibility of black ice under different types of lighting (e.g., LED vs. halogen headlights).

**Reflectivity Comparisons**

To summarize, while black ice and water both reflect light differently based on the color of the light, the differences are subtle. Here's a comparison chart to illustrate these points:

| Property | Black Ice | Water |
| --- | --- | --- |
| **Refractive Index (approx.)** | 1.31 | 1.33 |
| **Reflectance (blue light)** | Slightly higher than red light | Slightly higher than red light |
| **Reflectance (red light)** | Slightly lower than blue light | Slightly lower than blue light |
| **Visibility** | Difficult to see; looks wet | More visible; appears darker |

Overall, the difference in reflectivity due to color is minor, but it is still an important factor in understanding the optical properties of black ice and how it might appear under different lighting conditions.

Thus, the model can be trained to distinguish between water, ice and black ice on the road. Water acts as a pure reflector, but may have ripples, splashes and/or other effects due to wind on the surface, rain continuing to fall, and/or vehicles driving through the area. Black ice acts as a reflector, but also the characteristics of the underlying surface are transmitted to the camera, e.g. the road characteristics/texture can also be determined in the captured image. White ice acts as a better reflector than black ice but the light has a broken effect, e.g. due to bubbles in the ice or other flaws.

Where an infrared camera is used, this can capture information relating to "heat" in the image. For instance, water typically has a different temperature than the surrounding road surface and this contrast can be detected by the infrared camera. Ice may have a different temperature again. Furthermore, water evaporating from the road surface tends to cool the surface it is on, which may be detected. Water and ice may also have different heat capacity and thermal conductivity, meaning it can absorb and transfer heat at different rates that dry road conditions. This can affect how quickly it cools or heats, which can be detected by an IR camera. One limit of using an IR camera is that it can be affected by ambient temperature. Thus, it may be preferable to use an IR camera in addition to a visible light camera, e.g. a multi or hyperspectral camera, such that the AI can learn to detect the different signatures across the range of frequencies.

In a similar way, the model may be trained to detect other surface conditions, such as sand or dust on the road surface that may affect driving conditions or otherwise be of interest.

A patterned strip 46 may be deposited on the roadway in the field of view of the camera to help distinguish between different road surface conditions and help the AI recognise the degree to which the underlying texture is transmitted to the camera. This can help the AI distinguish between the different effect the road surface conditions have on the reflection of the light from the traffic lights. The pattern may comprise stripes, checkerboard pattern, chevrons, etc, and/or different colours. Alternatively, the camera may capture an image including a part of the junction with road markings.

As discussed above, it can be advantageous for the camera to capture wider background around the traffic light and junction. This for instance can indicate an urban or rural environment which can help the AI interpret the images. For instance, snow lying on fields in a rural environment will appear different to snow in a built up urban environment of buildings and pavements, etc. The AI model can use this additional secondary information to help provide context to interpreting the primary information about how the light from the traffic lights directly or via the reflections appears under different weather conditions.

Additionally, the camera may have an IR detector, e.g. be a multispectral camera, to capture other wavelengths of light which may give further information to the AI in distinguishing different weather conditions. In general it is undesirable for the cameras to include a light source as this may risk blinding drivers. Nonetheless, the camera may optionally include an IR light source to help illuminate the scene and give more information to the AI.

In addition to the camera images, the model may also receive inputs from a weather station of weather forecasting service to aid classification and/or time of day. Thus, for example, a period of raid followed by sub zero temperatures overnight may inform a determination that ice has formed on the road.

In some examples, the camera is used to monitor traffic and is temporarily repurposed for classifying weather conditions by the software causing it to be moved and/or focussed to capture the traffic light periodically or in response to a signal indicating adverse weather conditions are expected, e.g. with reference to a weather forecast input to the software. This may avoid the need to install additional cameras at all as the system can piggyback on existing infrastructure. In some examples, the camera could be monitoring traffic at a first junction and, upon command, be moved and focussed on traffic lights at an adjacent second junction for detection of weather conditions on the road. Thus, a camera on a road monitoring a first junction may be turned around and zoomed in on a junction further down the road.

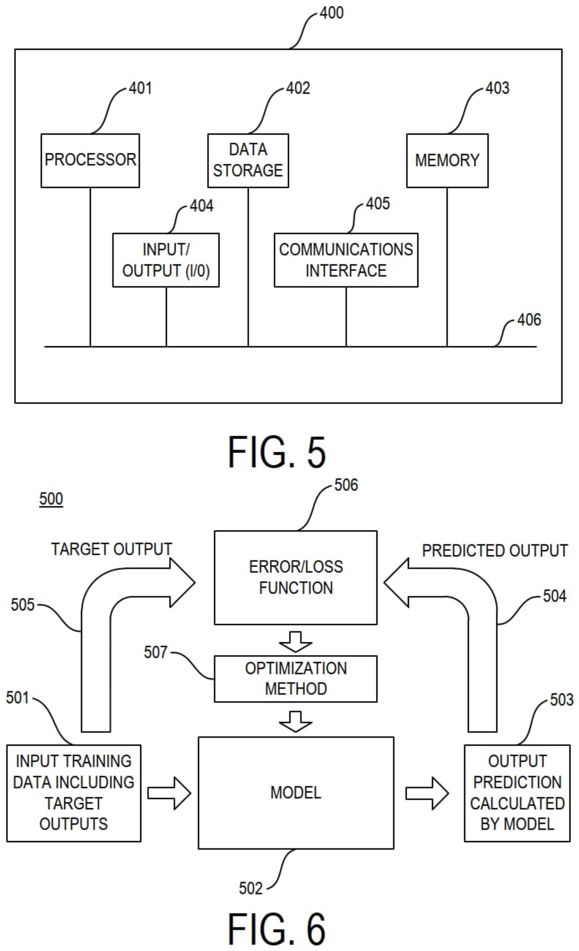

Figure 6 shows an example computing system architecture 400 for the server 50 for processing the image data, although it will be appreciated that other computer systems, distributed computer systems, cloud based computer system, etc. can be used. Generally the computer system can comprise: a processor 401, input/output 404 providing a user interface, data storage 402 which can be used to store image data in a file system or database, communications interface 405 for receiving image and other input data over a communications network, and memory 403 for containing programming instructions and working memory, all communicating via a bus 406. Input/output devices 404 may include peripherals, such as a camera, printer, scanner, display screen, etc. Input/output devices 404 may include a display device for displaying information to the user, a keyboard, and a pointing device such as a mouse or a trackball by which the user can provide input.

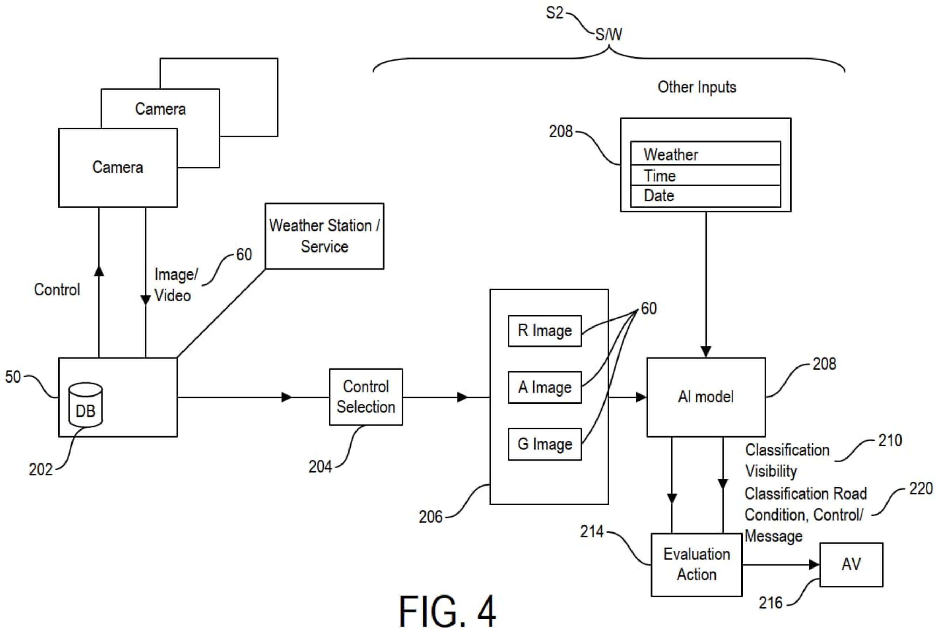

Figure 4 shows more detail of the software system 52. Images or video capture from the camera(s) are transmitted to the server 50 and stored in a database 202 for use in classifying weather conditions and/or in training the models. The central server may for instance have an architecture as per Figure 6. The central server also receives data from one or more weather stations or weather prediction services, which are geographically co-located with the cameras/junctions they monitor, i.e. the weather data is for the same city or district as the cameras/junctions, which may also be saved in the database. The images and weather data may be timestamped and/or geotagged.

In real time, a control block may control the cameras to capture appropriate images, e.g. based on timings, captured images and/or weather data. For instance, the weather data may indicate that adverse weather conditions are expected soon or are currently taking place, e.g. rain or mist is expected in an area. In response, the control block may issue commands to the cameras to focus on the traffic lights in that area and begin capturing images 60 for use in classifying the weather related visibility and/or road conditions. Thus, where the cameras have a dual function and are normally, for instance, monitoring traffic, they may be temporarily diverted from this purpose to capture images of the traffic lights for use in classifying visibility/road conditions. Alternatively or additionally, the cameras may be periodically diverted to capture images of the traffic lights, e.g. every hour or 10 minutes, etc. This may involve using tilt, pan and/or zoom capabilities of the cameras to capture appropriate images. In other examples, the cameras may be dedicated to watching the traffic lights for use in classifying visibility and/or road conditions such that no movement is required. However, again, images may be captured only periodically if required, i.e. to save power, bandwidth or processing power. It may be sufficient to only generate an output classification every few minutes say, as visibility/road surface conditions may be unlikely to change quickly.

The control block 204 selects appropriate images to send to the model for classification. This might for instance involve selecting a number of still frames from the video feed captured by the cameras so as to capture different phases of the traffic lights, i.e. different colour lights. In some examples, the control block may cause the camera to focus on different parts of the junction so as to capture one or more traffic lights at the junction in relative close up and/or particular areas of the road surface at the junction where, for example, there is known to be a problem with ice formation/water pooling and/or there are particular patterns on the road surface that aid the AI model in determining the road condition.

Returning to Figure 4, an input image vector 206 is assembled for input to the AI model. In this case it consists of still images corresponding to red, green and amber phases of the traffic lights. Further inputs 208 to the AI may comprise current weather data, and current time/date information. In other examples, more or less information may be provided, e.g. a time series of input images 206 and or the video feed itself may be input to the AI on a continuous basis.

The method may further include, prior to construction of the road condition deep learning model, masking out information of one or more dynamic objects on the roadway from the received camera data. The method may include, prior to construction of the road condition deep learning model, limiting the received camera data to a selected range or area of the scene, i.e. by performing initial computer vision techniques to crop or place bounding boxes around traffic lights and other areas of interest. The method may include smoothing ground truth measurements of the ground truth data prior to construction of the road condition deep learning model.

The AI model 208 processes the inputs and outputs a classification of visibility 210, i.e. is there fog, mist, etc; and a classification of road surface conditions 212, i.e. is there standing water, or ice, etc. The outputs may be a binary classification, i.e. 0 or 1 indicating the presence or not of a threshold amount of the weather condition, or classification into a higher number of classes indicating the degree of the weather condition, e.g. a number between 0 and 1, indicating the thickness of fog or ice.

During the training procedure, an operator gives feedback as to whether the prediction is correct or not. The training data will include images where there is no weather conditions of interest, e.g. good driving conditions, as well as images where there are weather conditions of interest, e.g. fog, rain, ice, etc. The AI may initially be trained to detect whether there is weather conditions of interest present or not, before being trained to distinguish between different types of weather condition.

In some examples, separate models may be used to classify visibility and road conditions. However, preferably there is some crossover between models, as there may be correlation between these factors, e.g. rain affecting visibility may be correlated with water build up on the road.

The model may have a "memory", e.g. a LSTM, such that sequences of inputs are used in forming the classification, e.g. a prolonged period of rain may lead to later water pooling on the road. In some examples, a separate model may be obtained for each junction/camera. Models for geographically linked junctions may be linked, e.g. if fog detected at one junction it is more likely that fog is present at a nearby junction. As described above, the images and/or other inputs may be geotagged and timestamped to aid this process. In other examples a single model is developed for all junctions.

The classifications 210,212 are processed by an evaluation and action module 214 which determines what action is required in response. For instance, if an adverse weather related visibility or road condition, e.g. black ice, is detected in the vicinity of a junction with a probability of greater than a predetermined threshold, a message or control signal 124,216 may be sent to AVs 122 approaching that junction that they should slow down or the driver should assume full control. Alternatively data 124 indicating the visibility/road conditions may be sent to software 122 onboard the AV 120 to determine an appropriate action or both. Such vehicles may operate in a fully autonomous mode or a partially autonomous mode where a person may provide some driving input. In order to operate in an autonomous mode, a determination may be made that driving conditions are suitable to safely permit this. Weather affecting visibility, e.g. fog, rain, etc, or weather affecting road conditions including whether the roadway is dry, wet, icy, etc. may impact safe autonomous operation of the vehicle, particularly at places where manoeuvres are expected, e.g. at junctions. In such scenarios, e.g. when rain is detected, the vehicle may prompt the driver to resume manual control within a set time, e.g. 10 seconds.

Alternatively or additionally, the AV 120 may take automatically take appropriate action such as reducing speed, altering settings of the vehicle, such as wipers or lights, take or communicate to the driver a different route to avoid a junction where an issue has been identified, or any other suitable measures.

In still other examples, an alert may be displayed to the driver, e.g. where the vehicle is not autonomous.

Nonetheless, it will be appreciated that there are many potential uses of classification of road surface/visibility conditions provided by the present disclosure. In many scenarios it is desirable to make the classification in real time, however the disclosure is not so limited.

While the above example use traffic light signals to provide the light source, other light sources are contemplated either in addition or as alternatives. The model may use other road signals or lights, such as streetlights. In such scenarios, the model may capture images including different light sources, e.g. a streetlight and a road sign, to obtain more information.

In some examples, the camera may incorporate its own light source to illuminate the surroundings, e.g. visible and/or infra-red. The camera may control the intensity and/or the on/off state of these to create a range of different illumination conditions to help obtain more information about the scene that could be ascertained from a single uniform source.

## Model Training

The AI 208 takes the form of deep learning model, i.e. computer algorithms that improve automatically through experience. Figure 6 shows an architecture 500 for training AI that can be used to automatically detect mines from the transformed image data. A set of training data 501 can be prepared comprising the input image data transformed by the methods above, and can be tagged with a human determination of what weather conditions are present, and optionally parts of the image of interest, etc. Further input can include details of the weather or terrain.

The AI includes a model 502 that outputs a prediction 503 of whether or not weather conditions of interest are present based on the input. The model is trained by learning from the training data over various epochs of training to iteratively converge to a solution, wherein in each iteration the "error" 506 between the predicted output 504 and the target output 505 from the input data can be fed back to optimise 507 the model, until it fits the input data and can generalize to new input image data to make accurate predictions. Some training data may be held back as validation data. Once the model has been trained, its ability to generalize to new unseen data may be tested on the validation data. For instance, the AI model can be a neural network. Thus, a machine learning algorithms builds build a model based on sample data, known as "training data", in order to make predictions or decisions without being explicitly programmed to do so.

Figure 6 shows an example flow 800 of the training and operation of the AI. At step 810, the historical data, e.g. 12 weeks data, is split into various sets, namely a training data set 811, a validation training set 812, and a testing data set 813. Training commences at step 820 with a base model, e.g. a neural network with x layers of y neurons, etc. The AI consumes the training set, comprising input vectors comprising the historic images 206 and other inputs 208, together with ground truth data, indicating the prevailing weather related visibility/road conditions. The ground truth data may be human generated, i.e. a human assessing the images and classifying them, and/or be based on concurrent weather data. The AI makes a prediction (which is likely to be inaccurate to begin with) for the traffic statistics at the future time period based on the input vector, and the error calculated according to a suitable metric according to the model, i.e. the difference between the actual statistics and estimated statistics. The error is back propagated through the network and the model weights adjusted to improve the accuracy of the prediction 825. This iterates through the training data set, i.e. one epoch, with the model gradually learning to make better predictions.

As the model is trained on the data, with each epoch, the model weights adjust to more closely learn the data. The weights go from underfitting the data, to fitting the data, to eventually overfitting the data. To prevent overfitting, at step 830, at the end of an epoch, the model is tested on the validation data set and records the resulting errors. It then passes 831 through the entirety of the training data again, this process is continued until there is no further increase in accuracy on the validation data for several epochs, as the model will begin to become overfit on the training data, i.e. the model begins to learn the training data well but fails to generalize the knowledge to the validation data. If there is no overfitting, the model is trained on the next epoch.

If overfitting begins to be seen, at step 840, a check is performed to see if the desired accuracy has been reached based on the validation data error. If not, the model hyperparameters that control the structure of the model are adjusted at step 845 and the training process begins again on the new model, and the results from the validation data are used to judge the successfulness of each model. If repeated adjustments of hyperparameters are insufficient to reach desired accuracy, the structure of the model may be adjusted in more extreme ways.

Once the desired accuracy is reached 850, a selection of models with the highest validation data results are tested on the testing data, and the one with the highest accuracy, and the most desirable over prediction/under prediction ratio is selected to be used. This model is then fed live data at step 860 and the results are sent to the traffic system 870. To further increase accuracy the live data is also stored 880 for further training. Thus, the AI can test its predictions against the observed data in real time and continually adjust the model. The live data is also stored in the historical store for use in future training.

Graphic processing units (GPUs), often with AI-specific enhancements, are suitable for training large-scale commercial cloud AI. NVidia (RTM) AI hardware (e.g. GEFORCE RTX 3090 may be suitable at time of writing) may be used in an embodiment.

Embodiments of the present invention have been described with particular reference to the examples illustrated.

However, it will be appreciated that variations and modifications may be made to the examples described within the scope of the present claims.

**Claims**

1. A method of detecting visibility and/or surface conditions at a location in a road network, the method comprising:

    capturing with a camera at least one image of a junction located in a road network where a traffic light is located;
    communicating the image to software running on a computer system;
    inputting the image to an AI component of the software trained to output a classification of the image relating to the visibility or surface condition; and
    detecting the visibility or surface condition based on the classification.

2. The method of claim 1, wherein the visibility conditions include one or more of fog, mist, rain, snow, and sleet, smoke, sandstorm, dust, and road conditions include one or more of water, ice, black ice, sand and dust on the road surface.

3. The method of any preceding claim, comprising determining an automatic action or warning relating to the operation of an autonomous vehicle in response a positive detection of the visibility or surface condition; and controlling operation of the automatic vehicle in autonomous mode in accordance with the determined action or causing a warning to be displayed to a driver of the autonomous vehicle.

4. The method of claim 3, wherein controlling operation of the vehicle includes at least one of alteration of a current driving action, modification of a planned route or trajectory, or activation or reconfiguring of an on-board system.

5. The method of any preceding claims, comprising displaying a warning message in response to a positive detection of the visibility or surface conditions at a roadside display.

6. The method of any preceding claim, comprising iteratively training the AI on a training data set comprising classified input images, wherein the input images are captured by cameras and classified according to data received from a local weather station and/or human operator.

7. The method of any preceding claims, comprising with the software issuing control signals to the camera causing the camera to pan, tilt or zoom to focus on the traffic light and/or an area of interest of the road surface before capturing the image.

8. The method of claim 7, wherein the software issues the control signal periodically and/or in response to a signal received from a weather service or weather station indicating or predicting adverse weather conditions in the area of the camera.

9. The method of any preceding claim, where the traffic light is on 24/7 and/or comprises plural lights of respective different colours.

10. The method of claim 9, wherein traffic lights have plural phases in which different sets of the plural lights are illuminated, wherein plural images captured by the camera or a video clip is communicated to the software such that images capturing each of the plural phases are used by the AI to classify the weather.

11. The method of any preceding claim, comprising communicating weather information from a weather prediction service or weather station to the software as further input to the AI in classifying the image according to weather-related conditions.

12. The method of any preceding claim, comprising with the software cropping the images to focus on the traffic lights or areas of the road surface which reflect light from the traffic lights before inputting them to the AI.

13. The method of any claim 12, wherein the area of road surface has a pattern selectively deposited thereon.

14. The method of any preceding claim, wherein the AI is iteratively trained on a training data set comprising classified input images, wherein the input images are captured by cameras and classified according to data received from a local weather station and/or human operator labelling.

15. The method of any preceding claim, wherein classifications of the AI are checked against observed weather conditions to provide feedback and further improve the accuracy of the AI model.

16. The method of any preceding claim, wherein the camera comprises or is associated with a light source.

17. A method of training AI to determine visibility or surface conditions at a location in a road network, the method comprising:

receiving a training data set comprising plural records, each record including at least one image of a junction located in a road network where a traffic light is located and an output vector of prevailing visibility or surface conditions at the junction;

training an AI model on the training data set to produce an output indicative of a classification of the image according to visibility or surface conditions, wherein training includes successively feeding the input vectors into the model to classify the images, and feeding back the error between the classification and output vector to adjust the model parameters.

18. Software comprising computer program instructions for causing a computer system to carry out the method of any preceding claim.

19. A system for detecting visibility or surface conditions at a location in a road network, the system comprising:

at least one traffic light located at a junction in a road network;

a camera (30) arranged to capture at least one image (60) of the junction where the traffic light is located; and

a computer system in communication with the camera and arranged to execute software, wherein the software is arranged to receive images captured by the camera,

the software comprising an AI model trained to output a classification of the image relating to the visibility or surface condition, and

the software is arranged to detect the visibility or surface condition based on the classification.

20. The system of claim 19, arranged to carry out the method of any preceding claim.

21. A method of detecting visibility and/or surface conditions at a location in a road network, the method comprising:

capturing with a camera (30) at least one image (60) at a junction or location in a road network where a light is located or where the camera comprises a light to illuminate the surroundings;

communicating the image to software running on a computer system;

inputting the image to an AI component of the software trained to output a classification of the image relating to the visibility or surface condition; and

detecting the visibility or surface condition based on the classification.

FIG. 1

FIG. 2

FIG. 3A

FIG. 3B

FIG. 3C

FIG. 4

400

401 PROCESSOR

402 DATA STORAGE

403 MEMORY

404 INPUT/ OUTPUT (I/0)

405 COMMUNICATIONS INTERFACE

406

# FIG. 5

500

506 ERROR/LOSS FUNCTION

TARGET OUTPUT

PREDICTED OUTPUT

505

504

507 OPTIMIZATION METHOD

501 INPUT TRAINING DATA INCLUDING TARGET OUTPUTS

MODEL

503 OUTPUT PREDICTION CALCULATED BY MODEL

502

# FIG. 6

FIG. 7

26

Europäisches
Patentamt

European
Patent Office

Office européen
des brevets

# EUROPEAN SEARCH REPORT

**Application Number**

EP 25 21 6034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABU-ALRUB NADER J ET AL: "Compact CNN-based road weather condition detection by grayscale image band for ADAS", PROCEEDINGS OF THE SPIE, SPIE, US, vol. 12115, 6 June 2022 (2022-06-06), page 121150L, XP060159412, ISSN: 0277-786X, DOI: 10.1117/12.2617585 ISBN: 978-1-5106-5738-0 * abstract * * figures 3, 4 * * table 1 * * page 3, paragraph 1 - page 6, paragraph 1 * | 1-21 | INV. G06V10/764 B60W30/18 B60W40/06 B60W50/14 G06V20/56 G06V20/58 G08G1/01 G08G1/04 G08G1/095 G06V20/54 |
| X | US 2020/089969 A1 (LAKSHMI NARAYANAN ATHMANARAYANAN [US] ET AL) 19 March 2020 (2020-03-19) * figures 1-7 * * paragraph [0003] - paragraph [0011] * * paragraph [0030] - paragraph [0062] * | 1-21 | |
| X | US 2023/206651 A1 (JAIN VIKAS ASHOK [IN] ET AL) 29 June 2023 (2023-06-29) * figures 1-6 * * paragraph [0022] - paragraph [0060] * | 1,3-10, 12-14, 16-21 | TECHNICAL FIELDS SEARCHED (IPC) G06V G08G B60K B60W |
| A | EP 3 361 412 A1 (FUJITSU LTD [JP]) 15 August 2018 (2018-08-15) * paragraph [0001] * * paragraph [0008] - paragraph [0045] * | 1-21 | |
| A | WO 2021/133659 A1 (WAYMO LLC [US]) 1 July 2021 (2021-07-01) * figures 1-5, 8 * * paragraph [0004] - paragraph [0008] * * paragraph [0149] - paragraph [0156] * | 1-21 | |

-/--

The present search report has been drawn up for all claims

| Place of search | Date of completion of the search | Examiner |
|---|---|---|
| The Hague | 4 February 2026 | Konya, Iuliu |

EPO FORM 1503 03.82 (P04C01)

page 1 of 2

Europäisches
Patentamt

European
Patent Office

Office européen
des brevets

**EUROPEAN SEARCH REPORT**

Application Number

EP 25 21 6034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/294179 A1 (STEIN GIDEON [IL] ET AL) 26 September 2019 (2019-09-26) <br> * figures 1, 2, 5A, 5D, 19-21 * <br> * paragraph [0135] - paragraph [0143] * <br> * paragraph [0153] - paragraph [0155] * <br> * paragraph [0241] - paragraph [0247] * <br> ----- | 1-21 | |

TECHNICAL FIELDS
SEARCHED     (IPC)

The present search report has been drawn up for all claims

| Place of search | Date of completion of the search | Examiner |
|---|---|---|
| The Hague | 4 February 2026 | Konya, Iuliu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 6034

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| US 2020089969 A1 | 19-03-2020 | CN 110909587 A | 24-03-2020 |
| | | JP 6935467 B2 | 15-09-2021 |
| | | JP 2020047267 A | 26-03-2020 |
| | | US 2020089969 A1 | 19-03-2020 |
| US 2023206651 A1 | 29-06-2023 | CN 114155272 A | 08-03-2022 |
| | | DE 102021123159 A1 | 10-03-2022 |
| | | US 2022076032 A1 | 10-03-2022 |
| | | US 2023206651 A1 | 29-06-2023 |
| EP 3361412 A1 | 15-08-2018 | NONE | |
| WO 2021133659 A1 | 01-07-2021 | CN 114845915 A | 02-08-2022 |
| | | CN 114845916 A | 02-08-2022 |
| | | EP 4065443 A1 | 05-10-2022 |
| | | EP 4065444 A1 | 05-10-2022 |
| | | IL 294137 A | 01-08-2022 |
| | | IL 294144 A | 01-08-2022 |
| | | JP 7539470 B2 | 23-08-2024 |
| | | JP 7558275 B2 | 30-09-2024 |
| | | JP 2023507100 A | 21-02-2023 |
| | | JP 2023507108 A | 21-02-2023 |
| | | JP 2024170427 A | 10-12-2024 |
| | | JP 2025020098 A | 12-02-2025 |
| | | US 2021191399 A1 | 24-06-2021 |
| | | US 2021195112 A1 | 24-06-2021 |
| | | US 2023262202 A1 | 17-08-2023 |
| | | US 2024430384 A1 | 26-12-2024 |
| | | WO 2021133659 A1 | 01-07-2021 |
| | | WO 2021133664 A1 | 01-07-2021 |
| US 2019294179 A1 | 26-09-2019 | CN 106462727 A | 22-02-2017 |
| | | CN 111199218 A | 26-05-2020 |
| | | EP 3100206 A1 | 07-12-2016 |
| | | EP 3736732 A1 | 11-11-2020 |
| | | US 2015210274 A1 | 30-07-2015 |
| | | US 2015210275 A1 | 30-07-2015 |
| | | US 2015210276 A1 | 30-07-2015 |
| | | US 2015210277 A1 | 30-07-2015 |
| | | US 2015210278 A1 | 30-07-2015 |
| | | US 2015210312 A1 | 30-07-2015 |
| | | US 2016167704 A1 | 16-06-2016 |
| | | US 2016283807 A1 | 29-09-2016 |
| | | US 2016306361 A1 | 20-10-2016 |
| | | US 2019294179 A1 | 26-09-2019 |
| | | US 2020225681 A1 | 16-07-2020 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 21 6034

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | Publication date | Patent family member(s) | | Publication date |
|---|---|---|---|---|
| | | US | 2022317700 A1 | 06-10-2022 |
| | | WO | 2015116950 A1 | 06-08-2015 |

EPO FORM P0459

For more details about this annex : see Official Journal of the European Patent Office, No. 12/82

page 2 of 2

**EP 4 745 911 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014029790 A1
- EP 2195688 A2
- US 11521127 B
- US 20040204812 A1
- US 2018005084 A1
- US 2021372919 A1
- US 2002040962 A
- US 2007031006 A1
- WO 2009027089 A2
- US 6831261 B
- JP H11278182 A
- KR 102471542 B1